# FASCICULE DE BREVET EUROPEEN

(11) **EP 0 604 258 B1**
(45) Date de publication et mention de la délivrance du brevet: **24.09.1997**
(21) Numéro de dépôt: 93402944.8
(22) Date de dépôt: 06.12.1993
(51) Int. Cl.: C08L 95/00

(54) **Emulsions aqueuses bitume-polymère, leur procédé de préparation et leurs applications**
Wässrige Bitumen-Polymer Emulsionen, deren Herstellungsverfahren und Verwendung
Aqueous bitumen polymer emulsions, their preparation method and their applications

(30) Priorité: 14.12.1992 FR 9215017
(43) Date de publication de la demande: 29.06.1994
(73) Titulaire: TOTAL RAFFINAGE DISTRIBUTION S.A., 92800 Puteaux (FR)
(72) Inventeur: Lemoine, Guy, F-76600 Le Havre (FR); Mariotti, Sophie, F-76600 Le Havre (FR)
(74) Mandataire: Jolly, Jean-Pierre

(56) Documents cités:
- EP-A- 0 351 736
- EP-A- 0 467 790
- US-A- 4 038 096
- US-A- 5 130 354

## Description

La présente invention concerne des émulsions aqueuses bitume-polymère, la préparation de celles-ci et leurs applications, notamment pour la réalisation de revêtements bitumineux ayant des propriétés physiques améliorées.

Il est connu que le bitume peut être produit, notamment, à partir du pétrole brut, par distillation de celui-ci et désasphaltage de la fraction lourde issue de la (ou les) distillation(s). Le bitume est constitué, selon l'origine du pétrole brut, de proportions variables d'huile paraffinique (aliphatique ou naphténique), aromatique, de résines et d'asphaltènes (on peut se reporter à ce sujet au brevet EP 246 956, dont la Demanderesse est titulaire).

Selon sa constitution, le bitume peut présenter un caractère plus ou moins thermoplastique ; il se ramollit sous l'effet de la chaleur, son point de ramollissement, appelé communément température "bille-anneau" en raison de la méthode utilisée pour le déterminer (conformément à la norme AFNOR NFT 66008), pouvant varier selon le procédé d'obtention du bitume entre environ 30 et environ 130°C.

Ces températures peuvent être jugées insuffisantes pour certaines applications :
- risque de fluage à température élevée dans l'application à la réalisation de chapes d'étanchéité,
- comportement élastique,
- tenue en température de certains mastics, lors de certains traitements (caisses d'automobile).

Parmi les techniques connues pour améliorer la tenue en température d'un bitume, on peut citer notamment :
1) L'oxydation du bitume par la technique de soufflage par de l'air à environ 250°C ; le produit ainsi obtenu peut présenter des températures "bille-anneau" élevées, est plus dur et plus cassant ;
2) La modification du bitume par incorporation de certains polymères, les températures "bille-anneau" du produit obtenu pouvant atteindre des valeurs de 120 à 150°C ; à cette température de 150°C, le produit obtenu présente de faibles propriétés élastiques ;
3) La modification du bitume par l'incorporation de polymères du type SBR (styrène-butadiène rubber) ou SBS (styrène-butadiène-styrène), vulcanisables à l'aide de soufre (ou de donneurs de soufre) ou de peroxydes. Cette technique nécessite des températures élevées et parfaitement contrôlées pendant des temps relativement longs ; le produit ainsi obtenu présente une viscosité très élevée, difficilement compatible avec les procédés de mise en oeuvre de la technique usuelle. En outre, la vulcanisation lui apporte un caractère irréversible peu favorable à une mise en oeuvre aisée. L'utilisation du produit doit s'effectuer dans les semaines qui suivent sa fabrication, sa viscosité devant rester compatible avec les techniques actuelles de mise en oeuvre.

Pour tenter de remédier à ces inconvénients EP-A-351 736 cite des compositions pour feuilles d'étanchéité contenant 100 parties d'un copolymère étylène-α-oléfiné-greffé avec un silane et un peroxyde, et de 10 à 200 parties d'un bitume.

En particulier, la réticulation des produits moulés à base de bitume et copolymère greffés avec des composés alcoxysilane insaturés s'effectue dans l'eau.

Les compositions ainsi obtenues contiennent un polymère greffé avec un silane puis, ensuite seulement, le polymère est incorporé au bitume.

La mise en oeuvre de ces compositions apparaît donc compliquée.

US-A-5 130 354 concerne également des compositions bitume-polymère où le polymère est d'abord greffé par le silane avant d'être incorporé au bitume.

Le silane utilisé ici inclut des composés avec des substituants non hydrolysables et non greffables. Ces compositions ont des propriétés adhésives améliorées et sont notamment utilisables comme joints de scellement, mais elles présentent également l'inconvénient d'une mise peu aisée.

Par ailleurs, on peut également citer la demande de brevet EP-A-0467 790 qui, en se différenciant des deux solutions énoncées ci-dessus, a proposé de préparer une émulsion aqueuse d'un liant bitume-polymère à structure polymérique tridimensionnelle. Dans ce but, on amène à une zone de formation d'émulsion, un mélange comprenant :
- une composante bitume - polymère réticulable au soufre, à l'état fondu,
- une phase aqueuse renfermant un système émulsifiant,
- un système de réticulation donneur de soufre, et l'on maintient ce mélange dans la zone de formation de l'émulsion, à une température comprise entre 50 et 160°C, jusqu'à obtenir une émulsion de liant bitume-polymère, dans laquelle le polymère est réticulé en une structure tridimensionnelle. Pour éviter une réticulation excessive du polymère, se traduisant par une viscosité trop élevée de la composante bitume-polymère, il est recommandé de mettre immédiatement en émulsion le mélange de cette composante et du système de réticulation ou aussitôt après sa formation.

La présente invention vise elle aussi à proposer une émulsion aqueuse bitume-polymère réticulé, mais le mode de réticulation et le procédé de fabrication sont fondamentalement différents de ceux de EP-A- O 467 790, la réticulation étant effectuée, selon l'invention, de façon contrôlée.

L'invention vise à proposer un bitume-polymère présentant, avant réticulation du polymère, une faible viscosité, ce qui facilite sa mise en émulsion, ce bitume-polymère ayant une structure polymérique tridimensionnelle qui confère au produit final des valeurs élevées de viscosité, d'élasticité et de température "bille-anneau". L'invention vise en outre à éviter les inconvénients de mise en oeuvre des produits à trop forte viscosité.

A cet effet, l'invention a pour premier objet une émulsion bitume-polymère, caractérisée en ce qu'elle comprend :
a) au moins un bitume,
b) au moins un polymère présentant des chaînes hydrocarbonées à hydrogène mobile ou électron mobile choisi dans le groupe constitué par :
   - les polyoléfines telles que le polyéthylène ou le polypropylène et les copolymères d'oléfines,
   - les caoutchoucs naturels ou synthétiques comme :
      . l'EPDM (éthylène-propylène-diène monomère),
      . l'EPM (éthylène-propylène monomère),
      . les copolymères styrène-butadiène statistiques S.B.R. (styrène-butadiène rubber) ou séquencés S.B.S. (styrène-butadiène-styrène), linéaires ou étoilés, ou S.I.S. (styrène-isoprène-styrène),
      . le polyisobutylène (caoutchouc butyle),
      . le polybutadiène,
      . le polyisoprène,
      . le polynorbornène,
      . le polychloroprène,
   - le polychlorure de vinyle,
   - le copolymère éthylène-acétate de vinyle,
   ledit polymère étant greffé et réticulé in situ dans ledit bitume par l'intermédiaire d'un complexe d'au moins un composé organique du silicium, ledit complexe étant formé à partir d'un constituant primaire et d'un constituant secondaire, ce dernier étant le composé organique du silicium et étant choisi dans le groupe constitué par les chlorosilanes tel le trichlorosilane, les organochlorosilanes, tels le vinyltrichlorosilane, le méthyltrichlorosilane, le méthyldichlorosilane, le diméthyldichlorosilane ou le méthylvinydichlorosilane ; les esters d'organosilane, tels le méthyltriéthoxysilane ou le méthyltriméthoxysilane, le vinyltriméthoxysilane, le vinyl-tris (2-méthoxyéthoxy) silane ou le vinyltriacétoxysilane ; ou encore les dérivés méthacryl, époxy, mercapto, amino de silane,
c) de l'eau, et
d) au moins un agent émulsifiant.

L'invention a également pour second objet un procédé de préparation de cette émulsion, caractérisé en ce qu'il comprend les étapes suivantes :
a) la réalisation d'un mélange sensiblement homogène à l'état fondu d'au moins un bitume et d'au moins un polymère présentant des chaînes hydrocarbonés à hydrogène mobile ou électron libre choisi dans le groupe constitué par :
   - les polyoléfines telles que le polyéthylène ou le polypropylène et les copolymères d'oléfines,
   - les caoutchoucs naturels ou synthétiques comme :
      . l'EPDM (éthylène-propylène-diène monomère),
      . l'EPM (éthylène-propylène monomère),
      . les copolymères styrène-butadiène statistiques S.B.R. (styrène-butadiène rubber) ou séquencés S.B.S. (styrène-butadiène-styrène), linéaires ou étoilés, ou S.I.S. (styrène-isoprène-styrène),
      . le polyisobutylène (caoutchouc butyle),
      . le polybutadiène,
      . le polyisoprène,
      . le polynorbornène,
      . le polychloroprène,
   - le polychlorure de vinyle,
   - le copolymère éthylène-acétate de vinyle,
   ledit polymère étant éventuellement préalablement dissous dans un solvant, cette étape a) comprenant l'incorporation dans le mélange, maintenu à l'état fondu, de constituants primaire et secondaire précurseurs du complexe de greffage et de réticulation du polymère, d'au moins un composé organique du silicium choisi dans le groupe constitué par les chloro-silanes tel le trichlorosilane, les organochlorosilanes, tels le vinyl-trichlorosilane, le méthyltrichlorosilane, le méthyldichlorosilane, le diméthyldichlorosilane ou le méthylvinydichlorosilane ; les esters d'organosilane, tels le méthyltriéthoxysilane ou le méthyltriméthoxysilane, le vinyltriméthoxysilane, le vinyl-tris (2-méthoxyéthoxy) silane ou le vinyltriacétoxysilane ; ou encore les dérivés méthacryl, époxy, mercapto, amino de silane, ledit composé organique du silicium étant éventuellement préalablement dissous dans la solution de polymère,
b) le maintien du produit obtenu en a) à l'état fondu, sous agitation, pendant une durée suffisante pour obtenir le greffage du complexe du composé sur le polymère organique du silicium formé en a),
c) l'incorporation sous agitation, dans le composé bitume-polymère obtenu en b), d'une solution aqueuse de l'agent émulsifiant à une température suffisante pour maintenir le composé bitume-polymère à l'état fondu, cette étape c) conduisant à l'obtention d'une émulsion.

Au sens de la présente invention, le bitume utilisable dans l'émulsion bitume-polymère peut être un bitume qui sera appelé ci-après bitume "naturel", pour le différencier du bitume "synthétique" décrit plus loin. Ce bitume naturel sera issu du pétrole brut, des schistes bitumineux, d'huiles lourdes, de sable bitumineux etc... ou même de charbon.

Le bitume peut être, par exemple :
a) la fraction la plus lourde obtenue par distillation directe sous pression atmosphérique ou sous pression réduite d'un pétrole brut ;
b) la phase lourde obtenue par désasphaltage au solvant d'une fraction lourde obtenue selon a) ;
c) le produit obtenu, par oxydation, en présence ou non de catalyseurs, d'une fraction lourde selon a) ou d'une phase lourde selon b) ;
d) le produit obtenu, par oxydation, en présence ou non de catalyseurs, d'un mélange :
   - d'une fraction lourde selon a) ou d'une phase lourde selon b), et
   - d'un distillat, ou
   - d'un extrait aromatique obtenu dans la désaromatisation des huiles lubrifiantes, ou
   - d'un brai de désasphaltage ;
e) un mélange d'un produit oxydé obtenu selon b) ou c) ou d'une base dure, et
   - d'un distillat, ou
   - d'un extrait aromatique obtenu dans la désaromatisation des huiles lubrifiantes, ou
   - d'un brai de désasphaltage, ou
   - d'une fraction lourde selon a) ou d'une phase lourde selon b) ;
f) une base viscoréduite, seule ou en mélange avec un des produits ci-dessus.

Le bitume utilisable peut être également un bitume "synthétique" ayant des caractéristiques voisines de celles d'un bitume "naturel" tel que décrit ci-dessus, par exemple les liants synthétiques clairs colorables par addition de pigments.

Il peut s'agir par exemple de résines de pétrole ou de résines indène-coumarone, en mélange avec des hydrocarbures aromatiques et/ou paraffiniques.

Les résines de pétrole peuvent être préparées par polymérisation d'hydrocarbures insaturés présents dans des fractions pétrolières insaturées, telles que les fractions obtenues par craquage thermique ou à la vapeur d'eau ou par pyrolyse.

Les résines indène-coumarone sont obtenues à partir des goudrons de houille.

Le mélange bitume-polymère initial peut contenir jusqu'à 25 % en masse de polymère utilisé, de préférence de 3 à 15% en masse, en fonction de la nature du polymère et des qualités désirées pour l'utilisation visée.

L'émulsion selon l'invention peut comprendre de préférence :
a) de 29 à 67 % en masse de bitume,
b) de 1 à 13 % en masse de polymère réticulé et greffé,
c) de 69,5 à 18 % en masse d'eau,
d) de 0,5 à 12 % en masse d'agent émulsifiant,
le polymère greffé et réticulé pouvant contenir jusqu'à 10% en poids de complexe (constituant primaire + constituant secondaire).

La Demanderesse a utilisé ainsi avec succès de l'EPDM pouvant présenter un taux d'éthylène compris entre 45 et 80 % en poids, une masse moléculaire en masse comprise entre 100 000 et 500 000 et un taux de monomère diène compris entre 1 à 10 % en masse, ce monomère pouvant être, par exemple, de l'éthylidène norbornène, du dicyclopentadiène ou de l'hexadiène.

Elle a également uilisé avec succés un SBS séquencé étoilé.

Le bitume est choisi, du point de vue de sa constitution, pour avoir une bonne compatibilité avec le polymère en adaptant les rapports hydrocarbures saturés, aromatiques et résines du bitume.

Sans que ce qui suit puisse avoir une incidence sur la brevetabilité de la présente invention, la Demanderesse estime que, dans l'émulsion selon l'invention, le polymère sur lequel est greffé un complexe d'au moins un composé organique du silicium est ensuite réticulé par hydrolyse dudit composé.

Le complexe est lui-même formé d'un constituant primaire, combiné à un constituant secondaire, le composé organique du silicium, qui sera appelé ci-après par simplification silane, bien qu'il puisse contenir d'autres atomes que des atomes de silicium et d'hydrogène, des atomes d'oxygène par exemple.

Le constituant primaire, qui grefferait le constituant secondaire sur le polymère, peut être par exemple un composé donneur de soufre ou un peroxyde. Le composé du soufre se révèle plus performant et est préféré.

La Demanderesse a ainsi utilisé avec succès le tétrasulfure de dipentaméthylène thiurame. On peut également utiliser par exemple la 4-4' dithiodimorpholine.

Le silane utilisé sera choisi en fonction de sa masse moléculaire et de sa température d'ébullition. Le vinyl-tris (2-méthoxyéthoxy) silane se révèle particulièrement intéressant, compte tenu de sa température d'ébullition supérieure à 180°C.

Cette température est en effet importante, car la première étape du procédé de préparation de l'émulsion bitume-polymère selon l'invention consiste à mélanger le polymère et le bitume à une température qui peut être comprise entre 150 et 230°C dans une enceinte de mélange dynamique avec rotor, pendant une durée qui peut être de 1 à 3 heures, pour obtenir une dispersion sensiblement homogène du polymère dans le bitume. L'enceinte de mélange peut être du type turbine Rayneri.

Le polymère peut être, avant le mélange, dissous dans un solvant, tel qu'un solvant aromatique, comme un extrait aromatique obtenu dans le préparation des bases lubrifiantes.

Au cours de cette étape, les composés primaire (donneur de soufre par exemple) et secondaire (silane) sont incorporés simultanément ou successivement dans le mélange fondu de bitume et de polymère, que l'on maintient sous agitation pendant une durée suffisante pour obtenir un greffage du composé silanisé sur les chaînes polymères par l'intermédiaire du composé soufré.

Quand le polymère est employé en solution dans un solvant, il est avantageux d'utiliser cette solution pour incorporer les composés primaire et secondaire, qui sont ainsi mieux dispersés et peuvent être employés à des concentrations plus faibles.

Après addition des composés primaire et secondaire, le mélange résultant chaud, où le complexe de réticulation commence à se former, a une faible viscosité, qui augmente avec le temps.

La cinétique de réticulation peut être accélérée par incorporation de catalyseurs, par exemple du type DLTDB (dilaurate de dibutylétain).

La préparation de l'émulsion selon l'invention nécessite l'utilisation d'un émulsifiant classique cationique, anionique, amphotère ou nonionique.

Une gamme d'émulsifiants préférée comprend les émulsifiants cationiques, dans les applications routières, pour des raisons de réactivité chimique avec les granulats. On utilise, par exemple, des amines telles que les dérivés des N-alkyl "suif" dipropylène polyamine ou dianine ou alkyl imidazopolyamine ou dérivés d'ammonium quaternaire.

Des émulsifiants tels que l'alcool polyvinylique peuvent être utilisés dans les applications dites industrielles.

La solution aqueuse d'émulsifiants cationiques peut comprendre entre 0, 1 et 2 % en masse d'une amine, la solution aqueuse d'alcool polyvinylique peut comprendre entre 1 et 10% en masse de cet alcool, et le mélange de ces solutions et du mélange bitume-polymère greffé comprendra entre 70 et 20 % en masse environ de cette solution aqueuse et entre 30 et 80 % en masse environ du mélange bitume-polymère.

Parmi les alcools polyvinyliques, on préfère ceux ayant un indice d'ester compris entre 50 et 200, et une viscosité inférieure à 15 mPas à 20°C (selon norme DIN 53015).

Le mélange de bitume-polymère greffé et de solution d'émulsifiant sera maintenu à une température inférieure à 100°C dans un mélangeur à rotor apte à produire une émulsion.

La préparation de l'émulsion selon l'invention peut également être effectuée dans une émulsionneuse sous pression.

La rupture des émulsions conformes à l'invention se produit par évaporation de l'eau à la température ambiante ou par chauffage. Si une rupture contrôlée rapide est souhaitée pour des applications spécifiques, on pourra utiliser un émulsifiant classique du type anionique ou cationique approprié, seul ou conjointement avec l'alcool polyvinylique.

On peut ajouter, si besoin est, à l'émulsion un ajusteur de pH : acide ou base minérale ou organique.

D'autres additifs tels que des agents gélifiants du type kaolin, bentonique ou tout autre additif connu pour ses propriétés thixotropiques, peuvent être ajoutés pour maintenir la stabilité de l'émulsion.

Les compositions bitume-polymère obtenues par évaporation de l'eau à partir des émulsions conformes à l'invention présentent une température bille et anneau qui peut dépasser 100°C et même 180°C, alors qu'avant mise en émulsion, la composition bitume-polymère greffée a une température bille et anneau très inférieure. Elles ont en outre une tenue satisfaisante à basse température de l'ordre de -20°C.

Les émulsions de bitume-polymère conformes à l'invention conviennent pour toutes les applications usuelles des émulsions de bitume, notamment des émulsions de bitume modifié.

Compte-tenu de la viscosité élevée de la composition bitume/polymère obtenue par évaporation de l'eau de l'émulsion conforme à l'invention, de son absence de fluage à température élevée et de ses propriétés adhésives, cette émulsion sera particulièrement bien adaptée à une utilisation comme revêtement en remplacement de certains revêtements polymériques tels que des plastisols de polychlorure de vinyle, des solutions de polymères, des latex, des émulsions de polymères ou des peintures, ou toutes autres applications industrielles. De telles émulsions peuvent également être utilisées dans les techniques dites "à froid" des applications routières.

Ces applications des émulsions constituent un autre objet de la présente invention.

Les exemples suivants, qui n'ont pas de caractère limitatif, illustrent l'invention.

### EXEMPLE 1

Cet exemple concerne la préparation d'une émulsion E1 bitume-polymère selon l'invention.

On prépare d'abord une composition C à partir :
1) d'un bitume d'origine pétrolière ayant les caractéristiques suivantes :
   - pénétrabilité à 25°C en 1/10 mm (selon norme AFNOR 66 004) : 200,
   - point de ramollissement en °C (selon norme AFNOR NFT 66 008) : 37,
2) d'un EPDM ayant les caractéristiques suivantes :
   - taux d'éthylène en masse : 50 %,
   - taux de diène en masse : 4 %,
   - taux de propylène en masse : 46 %,
   - masse moléculaire en mase : 210 000.

Le bitume (90 % en masse) et l'EPDM (10 % en masse) sont mélangés dans un mélangeur Rayneri, à 190°C, pendant 2 heures, au bout desquelles on obtient un mélange homogène.

On incorpore alors le système formant le complexe de greffage et de réticulation :
- silane vinyl-tris (2-méthoxyéthoxy) silane : 3 % en masse,
- composé soufré : tétrasulfure de dipentaméthylène thiurame : 0,5 % en masse.

Le mélangeage est poursuivi pendant 30 mn à 190°C.

On prépare une solution émulsifiante SE en mélangeant 83 % en masse d'eau et 17 % en masse d'alcool polyvinylique ayant les caractéristiques suivantes :
- masse volumique apparente g/cm³ : 0,60,
- indice d'ester : 120 à 150,
- viscosité à 20°C mPa s : 4.

On prépare ensuite l'émulsion E1 en mélangeant :
- 50 % en masse de la composition C,
- 33,5% en masse de la solution émulsifiante SE,
- 15 % en masse d'eau,
- 1,5 % en masse de bentonite.

L'émulsion est préparée au moyen d'un ultramélangeur à pression atmosphérique. Les températures de la composition C et de la solution SE sont telles que la température de l'émulsion est toujours inférieure à 100°C. L'ajout de bentonite permet d'obtenir une excellente stabilité au stockage.

La stabilité au stockage de l'émulsion ainsi obtenue (déterminée conformément à la norme ASTM D244) est inférieure à 10 %, c'est à dire que la ségrégation est inférieure à 10 %.

On évapore l'eau de l'émulsion sur une plaque, de façon à obtenir un revêtement de 2 mm d'épaisseur.

On détermine les propriétés mécaniques du revêtement selon la norme NFT 46-002.

On effectue des essais de traction à 20°C sous une vitesse de 500 mm/minute à partir d'éprouvettes-haltères. On obtient les résultats figurant dans le Tableau I ci-après.

**TABLEAU I**

| | Composition C avant mise en émulsion | Emulsion C évaporée |
|---|---|---|
| Température bille-anneau en °C | 75 | > 180 |
| Elongation maximale en % | 4 000 | 200 |
| Contrainte à l'élongation maximale en 10⁵ Pa | 0,15 | 3-4 |

Les valeurs d'élongation plus faible et de contrainte plus élevée montrent bien que l'émulsion évaporée est réticulée.

### EXEMPLE 2

On a répété l'exemple 1, mais en partant d'un bitume de pénétrabilité 45 dixièmes de mm à 25°C et de point de ramollissement égal à 52°C (76 parties en poids) mélangé avec un solvant white spirit (11 parties en poids).

L'émulsion E2 obtenue a les mêmes caractéristiques que l'émulsion E1.

### EXEMPLE 3

On a répété l'exemple 1, mais en remplaçant le bitume d'origine pétrolière par un bitume de synthèse, de pénétrabilité à 25°C de 200 dixièmes mm, et de température bille-anneau de 45°C, constitué par le mélange d'une résine de pétrole et d'un extrait aromatique provenant de l'extraction des hydrocarbures aromatiques d'une base lubrifiante.

On a obtenu les mêmes résultats que dans l'Exemple 1.

### EXEMPLE 4

Cet exemple concerne la préparation d'une émulsion E4 bitume-polymère selon l'invention et son utilisation pour la réalisation d'un liant bitumineux.

On prépare d'abord une composition C4 à partir :
a) d'un bitume d'origine pétrolière ayant les caractéristiques suivantes :
   - pénétrabilité à 25°C, en 1/10 mm (selon norme AFNOR NFT 66-004) : 90,
   - point de ramollissement, en °C (selon norme AFNOR NFT 66-008) : 45,
b) d'un copolymère SBS (styrène-butodiène- styrène) de type étoilé, ayant les caractéristiques suivantes :
   - taux de styrène en masse : 30 %
   - masse moléculaire en masse : 350 000.

Le bitume (97,5 parties en masse) et le SBS (2,5 parties en masse) sont mélangés à 180°C, pendant 3 heures, avec 3 parties en masse de silane (vinyl-tris (2-méthoxyéthoxy) silane) et 0,5 partie en poids d'un composé soufré (tétrasulfure de dipentaméthylène thiurame).

On obtient ainsi une composition C4 ayant un point de ramollissement de 57°C.

On prépare une solution émulsifiante SE4 en mélangeant, à 150°C, 92,9 parties en masse d'eau, 4,3 parties en masse d'un mélange d'amines grasses et 2, 8 parties en masse d'acide chlorhydrique de densité 1,16.

On prépare ensuite l'émulsion E4 en mélangeant :
- 65 parties en masse de la composition C4,
- 35 parties en masse de la solution émulsifiante E4.

On évapore l'eau de l'émulsion sur une plaque, de façon à obtenir un revêtement de 2 mm d'épaisseur.

On détermine le point de ramollissement du liant ainsi obtenu. Il est supérieur à 130°C.

L'émulsion E4 selon l'invention obtenue à partir de SBS permet donc de préparer des revêtements bitumineux ayant un point de ramollissement élevé.

### EXEMPLE 5

Cet exemple concerne la préparation de deux émulsions bitume-polymère selon l'invention, E51 et E52, et leur utilisation pour la réalisation de revêtements bitumineux.

On dispose du même bitume et du même polymère SBS que dans l'Exemple 4.

On réalise d'abord par mélange une solution-mère SM1 contenant, en parties en masse :
- huiles aromatique : 85,
- polymère SBS : 15,
- silane (idem exemple 4) : 6,
- composé soufré (idem exemple 4) : 1.

Le bitume (83 parties en masse) est ensuite mélangé avec 17 parties en masse de la solution-mère SM1 pour obtenir la composition C51.

Dans la composition C51, les taux respectifs de silane et de composé soufré sont donc respectivement de 1 % et 0,17% en masse. Le taux de polymère est de 2,5 parties en masse.

On réalise une composition C52 en mélangeant :
- 83 parties en masse de bitume,
- 14,5 parties en masse d'huile aromatique,
- 2,5 parties en masse de polymère SBS,
- 3 parties en masse de silane,
- 0,5 parties en masse de composé soufré.

Les mélanges sont effectués comme dans l'Exemple 4.

Les points de ramollissement des compositions C51 et C52 sont, respectivement, de 53°C et 52°C et donc pratiquement identiques.

On réalise à partir des compositions C51 et C52, de la même façon que dans l'Exemple 4, deux émulsions E51 et E52, à partir desquelles, après séchage (comme dans l'Exemple 4), on obtient deux revêtements ayant des points de ramollissement pratiquement identiques de 94°C et 95°C.

L'utilisation de solutions-mères permet de réduire les taux de silane et de composé soufré par un facteur 3.

## Revendications

1. Emulsion bitume-polymère, caractérisée en ce qu'elle comprend :
a) au moins un bitume,
b) au moins un polymère présentant des chaînes hydrocarbonées à hydrogène mobile ou électron mobile choisi dans le groupe constitué par :
- les polyoléfines,
- les caoutchoucs naturels ou synthétiques
- le polychlorure de vinyle,
- le copolymère éthylène-acétate de vinyle,
ledit polymère étant greffé et réticulé in situ dans ledit bitume par l'intermédiaire d'un complexe d'au moins un composé organique du silicium, ledit complexe étant formé à partir d'un constituant primaire et d'un constituant secondaire, ce dernier étant le composé organique du silicium choisi dans le groupe constitué par les chloro-silanes, les organochlorosilanes, les esters d'organosilane, ou encore les dérivés méthacryl, époxy, mercapto, amino de silane,
c) de l'eau, et
d) au moins un agent émulsifiant.

2. Emulsion selon la revendication 1, caractérisée en ce qu'elle comprend un bitume "naturel".

3. Emulsion selon la revendication 1, caractérisée en ce qu'elle comprend un bitume "synthétique".

4. Emulsion selon l'une des revendications 1 à 3, caractérisée en ce qu'elle comprend jusqu'à 25 parties en poids de polymère pour 75 parties en poids de bitume et, de préférence, de 3 à 15 parties en poids de polymère pour 97 à 85 parties en poids de bitume.

5. Emulsion selon l'une des revendications 1 à 4, caractérisée en ce qu'elle comprend :
a) de 29 à 67 % en poids de bitume,
b) de 1 à 13 % en poids de polymère réticulé et greffé,
c) de 69,5 à 18 % en poids d'eau,
d) de 0,5 à 12 % en poids d'agent émulsifiant.

6. Emulsion selon l'une des revendications 1 à 5, caractérisée en ce que le constituant primaire est un donneur de soufre ou un peroxyde.

7. Emulsion selon l'une des revendications 1 à 6, caractérisée en ce que le constituant primaire est le tétrasulfure de dipentaméthylène thiurame.

8. Emulsion selon l'une des revendications 1 à 7, caractérisée en ce que le constituant secondaire est le vinyl-tris (2-méthoxyéthoxy) silane.

9. Emulsion selon l'une des revendications 1 à 8, caractérisée en le polymère est un EPDM présentant un taux d'éthylène compris entre 45 et 80 % en poids, une masse moléculaire en poids comprise entre 100 000 et 500 000 et un taux de monomère diène compris entre 1 et 10 % en poids.

10. Emulsion selon l'une des revendications 1 à 8, caractérisée en ce que le polymère est un copolymère séquencé styrène-butadiène (SBS) étoilé.

11. Emulsion selon l'une des revendications 1 à 10, caractérisée en ce que l'agent émulsifiant est un alcool polyvinylique utilisé à raison de 0,2 à 7 parties en poids d'alcool polyvinylique pour 30 à 80 parties en poids du mélange bitume polymère greffé.

12. Emulsion selon la revendication 11, caractérisée en ce que l'alcool polyvinylique a un indice d'ester compris entre 50 et 200 et une viscosité à 20°C inférieure à 15 mPas.

13. Emulsion selon l'une des revendication 1 à 10, caractérisée en ce que l'agent émulsifiant est une amine ou un mélange d'amines.

14. Procédé de préparation d'une émulsion selon l'une des revendications 1 à 13, caractérisé en ce qu'il comprend les étapes suivantes :
a) la réalisation d'un mélange sensiblement homogène à l'état fondu d'au moins un bitume et d'au moins un polymère présentant des chaînes hydrocarbonés à hydrogène mobile ou électron libre choisi dans le groupe constitué par :
- les polyoléfines
- les caoutchoucs naturels ou synthétiques
- le polychlorure de vinyle,
- le copolymère éthylène-acétate de vinyle,
ledit polymère étant éventuellement préalablement dissous dans un solvant, cette étape a) comprenant l'incorporation dans le mélange, maintenu à l'état fondu, de constituants primaire et secondaire précurseurs du complexe de greffage et de réticulation du polymère, d'au moins un composé organique du silicium choisi dans le groupe constitué par les chloro-silanes, les organochlorosilanes, les esters d'organosilane, ou encore les dérivés méthacryl, époxy, mercapto, amino de silane ; ledit composé organique du silicium étant éventuellement préalablement dissous dans la solution de polymère,
b) le maintien du produit obtenu en a) à l'état fondu, sous agitation, pendant une durée suffisante pour obtenir le greffage du complexe du composé sur le polymère organique du silicium formé en a),
c) l'incorporation sous agitation dans le composé bitume-polymère obtenu en b), d'une solution aqueuse de l'agent émulsifiant à une température suffisante pour maintenir le composé bitume-polymère à l'état fondu, cette étape c) conduisant à l'obtention d'une émulsion.

15. Procédé selon la revendication 14, caractérisé en ce que le mélange de bitume et de polymère est effectué à une température comprise entre 150 et 230°C.

16. Application des émulsions selon l'une des revendications 1 à 13 à la réalisation de revêtements bitumineux, caractérisée en ce que la composition bitume-polymère obtenue par évaporation de l'eau des émulsions a une température "bille-anneau" supérieure à 100°C.

## Patentansprüche

1. Bitumen/Polymer-Emulsion, dadurch **gekennzeichnet**, daß sie enthält:
a) wenigstens ein Bitumen,
b) wenigstens ein Kohlenwasserstoffketten mit beweglichem Wasserstoff oder beweglichem Elektron aufweisendes Polymer, welches aus der Gruppe bestehend aus :
den Polyolefinen,
den natürlichen oder synthetischen Kautschuken,
Polyvinylchlorid,
Äthylen-Vinylacetat-Copolymer,
ausgewählt und in situ in dem Bitumen über einen Komplex mindestens einer organischen Siliziumverbindung gepfropft und vernetzt ist, der aus einem primären Bestandteil und einem sekundären Bestandteil gebildet ist, wobei letzterer die organische Siliziumverbindung ist, welche aus der Gruppe bestehend aus den Chlorsilanen, den Organochlorsilanen, den Organosilanestern oder den Methacryl -, Epoxy-, Mercapto-, Aminosilanderivaten ausgewählt ist,
c) Wasser und
d) wenigstens ein Emulgiermittel.

2. Emulsion nach Anspruch 1, dadurch **gekennzeichnet,** daß sie ein "natürliches " Bitumen enthält.

3. Emulsion nach Anspruch 1, dadurch **gekennzeichnet,** daß sie ein "synthetisches" Bitumen enthält.

4. Emulsion nach Anspruch 1, 2 oder 3, dadurch **gekennzeichnet,** daß sie bis zu 25 Gewichtsteile Polymer je 75 Gewichtsteile Bitumen, vorzugsweise 3 bis 15 Gewichtsteile Polymer je 97 bis 85 Gewichtsteile Bitumen, enthält.

5. Emulsion nach einem der Ansprüche 1 bis 4, dadurch **gekennzeichnet,** daß sie enthält:
a) 29 bis 67 Gewichtsprozent Bitumen,
b) 1 bis 13 Gewichtsprozent vernetztes und gepfropftes Polymer,
c) 69,5 bis 18 Gewichtsprozent Wasser,
d) 0,5 bis 12 Gewichtsprozent Emulgiermittel.

6. Emulsion nach einem der Ansprüche 1 bis 5, dadurch **gekennzeichnet**, daß der primäre Bestandteil ein Schwefelgeber oder ein Peroxyd ist.

7. Emulsion nach einem der Ansprüche 1 bis 6, dadurch **gekennzeichnet**, daß der primäre Bestandteil Dipentamethylenthiuramtetrasulfid ist.

8. Emulsion nach einem der Ansprüche 1 bis 7, dadurch **gekennzeichnet**, daß der sekundäre Bestandteil Vinyl-tris (2-methoxyäthoxy)- silan ist.

9. Emulsion nach einem der Ansprüche 1 bis 8, dadurch **gekennzeichnet,** daß das Polymer ein EPDM ist, welches einen Äthylengehalt zwischen 45 und 80 Gewichtsprozent, ein Molekulargewicht zwischen 100 000 und 500 000 und einen Gehalt an Dienmonomerem zwischen 1 und 10 Gewichtsprozent aufweist.

10. Emulsion nach einem der Ansprüche 1 bis 8, dadurch **gekennzeichnet,** daß das Polymer ein sternförmiges Styrol - Butadien - Styrol-Blockcopolymer ( SBS ) ist.

11. Emulsion nach einem der Ansprüche 1 bis 10, dadurch **gekennzeichnet,** daß das Emulgiermittel ein Polyvinylalkohol ist,, welcher im Verhältnis 0,2 bis 7 Gewichtsteile Polyvinylalkohol je 30 bis 80 Gewichtsteile Mischung aus Bitumen und gepfropftem Polymer verwendet wird.

12. Emulsion nach Anspruch 11, dadurch **gekennzeichnet**, daß der Polyvinylalkohol eine Esterzahl zwischen 50 und 200 sowie eine Viskosität bei 20°C kleiner als 15 mPas aufweist.

13. Emulsion nach einem der Ansprüche 1 bis 10, dadurch **gekennzeichnet**, daß das Emulgiermittel ein Amin oder ein Gemisch von Aminen ist.

14. Verfahren zur Herstellung einer Emulsion nach einem der Ansprüche 1 bis 13, **gekennzeichnet** durch die folgenden Schritte :
a) Erzeugung einer im wesentlichen homogenen Mischung in geschmolzenem Zustand aus wenigstens einem Bitumen und wenigstens einem Kohlenwasserstoffketten mit beweglichem Wasserstoff oder beweglichem Elektron aufweisenden Polymer, welches aus der Gruppe bestehend aus :
den Polyolefinen,
den natürlichen oder synthetischen Kautschuken,
Polyvinylchlorid,
Äthylen-Vinylacetat-Copolymer,
ausgewählt ist und gegebenenfalls vorher in einem Lösungsmittel gelöst wurde, und Einverleibung von primären sowie sekundären Bestandteilen in die in geschmolzenem Zustand gehaltene Mischung, welche Vorläufer des Komplexes zum Pfopfen und Vernetzen des Polymers sind, mindestens einer organischen Siliziumverbindung, welche aus der Gruppe bestehend aus den Chlorsilanen, den Organochlorsilanen, den Organosilanestern oder den Methacryl-, Epoxy-, Mercapto-, AminoSilanderivaten ausgewählt ist und gegebenenfalls vorher in der Polymerlösung gelöst wurde,
b) Halten des beim Schritt a) erhaltenen Produktes unter Rühren während einer solchen Zeitspanne in geschmolzenem Zustand, welche ausreicht, um den beim Schritt a) gebildeten Komplex der organischen Siliziumverbindung auf das Polymer zu pfropfen,
c) Einverleiben einer wäßrigen Lösung des Emulgiermittels unter Rühren in die beim Schritt b) erhaltene Bitumen/Polymer-Masse bei einer Temperatur, die ausreicht, um die Bitumen/Polymer-Masse in geschmolzenem Zustand zu halten, so daß sich eine Emulsion ergibt.

15. Verfahren nach Anspruch 14, dadurch **gekennzeichnet,** daß das Bitumen und das Polymer bei einer Temperatur zwischen 150 und 230°C vermischt werden.

16. Verwendung der Emulsionen nach einem der Ansprüche 1 bis 13 zur Erzeugung von bituminösen Belägen, dadurch **gekennzeichnet,** daß die durch Verdampfung des Wassers der Emulsionen erhaltene Bitumen/Polymer-Masse eine "Kugel-Ring" - Temperatur höher als 100°C aufweist.

## Claims

1. A bitumen-polymer emulsion, characterised in that it comprises:
a) at least one bitumen,
b) at least one polymer having hydrocarbon chains with mobile hydrogen or free electrons selected from the group comprising:
- the polyolefins,
- natural or synthetic rubbers,
- polyvinyl chloride,
- ethylene acetate vinyl copolymer,
said polymer being grafted and cross-linked in situ in said bitumen by means of a complex of at least one organic compound comprising silicon, said complex being formed starting from a primary constituent and a secondary constituent, the latter being the organic compound comprising silicon selected from the group comprising the chlorosilanes, the organochlorosilanes, the organosilane esters, or else the methacrylic, epoxy, mercapto or amino derivatives of silane.
c) water, and
d) at least one emulsifying agent.

2. An emulsion according to claim 1, characterised in that it comprises a "natural" bitumen.

3. An emulsion according to claim 1, characterised in that it comprises a "synthetic" bitumen.

4. An emulsion according to any one of claims 1 to 3, characterised in that it comprises up to 25 parts by weight of polymer per 75 parts by weight of bitumen, and, preferably, from 3 to 15 parts by weight of polymer per 97 to 85 parts by weight of bitumen.

5. An emulsion according to any one of claims 1 to 4, characterised in that it comprises:
a) from 29 to 67 % by weight of bitumen,
b) from 1 to 13 % by weight of cross-linked and grafted copolymer,
c) from 69.5 to 18 % by weight of water,
d) from 0.5 to 12 % by weight of emulsifying agent.

6. An emulsion according to any one of claims 1 to 5, characterised in that the primary constituent is a sulphur donor or a peroxide.

7. An emulsion according to any one of claims 1 to 6, characterised in that the primary constituent is dipentamethylene thiurame tetrasulphide.

8. An emulsion according to any one of claims 1 to 7, characterised in that the secondary constituent is vinyl-tris (2-methoxyethoxy) silane.

9. An emulsion according to any one of claims 1 to 8, characterised in that the polymer is an EPDM having a proportion of ethylene of between 45 and 80 % by weight, a molecular mass by weight of between 100,000 and 500,000 and a proportion of diene monomer of between 1 and 10 % by weight.

10. An emulsion according to any one of claims 1 to 8, characterised in that the polymer is a star-shaped block styrene butadiene copolymer.

11. An emulsion according to any one of claims 1 to 10, characterised in that the emulsifying agent is a polyvinyl alcohol used at a rate of 0.2 to 7 parts by weight of polyvinyl alcohol per 30 to 80 parts by weight of grafted bitumen-polymer mixture.

12. An emulsion according to claim 11, characterised in that the polyvinyl alcohol has an ester value of between 50 and 200 and a viscosity at 20°C of less than 15 mPas.

13. An emulsion according to any one of claims 1 to 10, characterised in that the emulsifying agent is an amine or a mixture of amines.

14. A method of preparing an emulsion according to any one of claims 1 to 13, characterised in that the it comprises the following steps:
a) forming a substantially homogeneous mixture in the molten state of at least one bitumen and of at least one polymer having hydrocarbon chains with mobile hydrogen or free electrons selected from the group comprising:
- the polyolefins
- natural or synthetic rubbers,
- polyvinyl chloride,
- ethylene acetate vinyl copolymer,
said polymer being optionally previously dissolved in a solvent, said step a) comprising incorporating into the mixture, which is maintained in the molten state, primary and secondary constituents which are precursors of the polymer grafting and cross-linking complex, of at least one organic compound comprising silicon selected from the group comprising the chlorosilanes, the organochlorosilanes, the organosilane esters, or else the methacrylic, epoxy, mercapto or amino derivatives of silane; said organic compound comprising silicon being optionally previously dissolved in the polymer solution,
b) maintaining the product obtained in a) in the molten state, with agitation, for a sufficient time to bring about the grafting of the complex of the compound on the organic polymer comprising silicon formed in a),
c) incorporating, with agitation, into the bitumen-polymer compound obtained in b), an aqueous solution of the emulsifying agent at a temperature which is sufficient to maintain the bitumen-polymer compound in the molten state, said step c) resulting in an emulsion being obtained.

15. A method according to claim 14, characterised in that the mixing of bitumen and polymer is carried out at a temperature of between 150 and 230°C.

16. Application of the emulsions according to any one of claims 1 to 13 to the production of bituminous coatings, characterised in that the bitumen-polymer composition obtained by evaporation of the water of the emulsions has a "ball-ring" temperature higher than 100°C.
